# EUROPÄISCHE PATENTSCHRIFT

(11) **EP 2 856 100 B1**
(45) Veröffentlichungstag und Bekanntmachung des Hinweises auf die Patenterteilung: **06.04.2016**
(21) Anmeldenummer: 13725941.2
(22) Anmeldetag: 24.05.2013
(51) Int. Cl.: G01M 17/007

(54) **VERFAHREN ZUM TESTEN EINES FAHRZEUGS ODER EINER KOMPONENTE EINES FAHRZEUGS**
METHOD FOR TESTING OF A VEHICLE OR A COMPONENT OF A VEHICLE
MÉTHODE D'ESSAI D'UN VÉHICULE OU UN PIECE COMPOSANT D'UN VÉHICULE

(30) Priorität: 25.05.2012 AT 502032012
(43) Veröffentlichungstag der Anmeldung: 08.04.2015
(73) Patentinhaber: AVL List GmbH, 8020 Graz (AT)
(72) Erfinder: PFISTER, Felix, A-8010 Graz (AT)
(74) Vertreter: Patentanwälte Pinter & Weiss OG
(86) Internationale Anmeldenummer: PCT/EP2013/060728
(87) Internationale Veröffentlichungsnummer: WO 2013/174974

(56) Entgegenhaltungen:
- WO-A2-2007/133600
- AT-U2- 11 552
- OLAF GIETELINK ET AL: "Development of advanced driver assistance systems with vehicle hardware-in-the-loop simulations", VEHICLE SYSTEM DYNAMICS, Bd. 44, Nr. 7, 1. Juli 2006 (2006-07-01), Seiten 569-590, XP055075570, ISSN: 0042-3114, DOI: 10.1080/00423110600563338
- YVONNE LASCHINSKY ET AL: "Evaluation of an Active Safety Light using Virtual Test Drive within Vehicle in the Loop", INDUSTRIAL TECHNOLOGY (ICIT), 2010 IEEE INTERNATIONAL CONFERENCE ON, IEEE, PISCATAWAY, NJ, USA, 14. März 2010 (2010-03-14), Seiten 1119-1112, XP031681041, ISBN: 978-1-4244-5695-6

## Beschreibung

Die gegenständliche Anmeldung betrifft ein Verfahren zum Testen eines Fahrzeugs oder einer Komponente eines Fahrzeugs, wobei das reale Fahrzeug auf einer realen Teststrecke fährt und eine Prüfsteuereinheit eine virtuelle Welt erzeugt oder abspielt, die sowohl einen virtuellen Fahrzeugzustand, als auch eine virtuelle Fahrzeugumgebung enthält.

Bei der Entwicklung und beim Test von Fahrzeugen ist es notwendig, bestimmte Fahrzustände herbeizuführen, um ein bestimmtes Verhalten des Fahrzeuges oder dessen Teilkomponenten unter bestimmten Bedingungen zu testen. Das kann entweder auf speziellen Prüfständen, wie z.B. Rollenprüfstände, oder auf Teststrecken (ob in Form von realen Straßen oder auf einem speziellen Testgeländes spielt hier keine Rolle) erfolgen. Beide Möglichkeiten haben Vor- und Nachteile. Auf Prüfständen kann man nicht beliebig nahe an reale Umgebungsbedingungen herankommen, da die gewünschte reale Umgebung nicht beliebig genau simuliert werden kann. Damit kann ein Test auf einem Prüfstand immer nur ein (wenn auch ein sehr nahe an die realen Verhältnissen herankommender) Anhaltspunkt für das reale Verhalten des Fahrzeuges auf der realen Fahrbahn sein. Dafür kann man auf einem Prüfstand (wie z.B. ein Rollenprüfstand für ein Fahrzeug) sehr flexible Prüfläufe abfahren. Eine Teststrecke wiederum ist natürlich in ihren Möglichkeiten, verschiedene Umgebungen, Streckenverläufe, etc. durchfahren zu können, limitiert.

Dazu zeigt Yvonne Laschinsky et al. ("Evaluation of an Active Safety Light using Virtual Test Drive within Vehicle in the Loop", INDUSTRIAL TECHNOLOGY (ICIT), 2010 IEEE INTERNATIONAL CONFERENCE ON, IEEE PISCATAWAY, NJ, USA, 2010-03-14, p 1119-1121, ISBN: 978-1-4244-5695-6) ein Testverfahren für ein Fahrassistenzsystem, bei welchem sich ein Fahrzeug auf einer realen Strecke bewegt. Für den Fahrer des Fahrzeuges wird die Umgebung über ein "head mounted display" in vollständig virtueller Form oder als virtuell angereicherte Realität wiedergegeben.

Auf einer Teststrecke können jedoch nicht beliebige Fahrzustände des Fahrzeuges erzeugt werden. Außerdem ist ein Test auf einer Teststrecke meist von den Umgebungsbedingungen (Temperatur, Feuchtigkeit) und vom Testfahrer abhängig (Schaltzeitpunkte, Pedalstellung(en), Lenkeinschlag, etc.) und damit auch nicht gänzlich reproduzierbar. Allerdings lassen sich durch Wahl verschiedener Teststrecken (z.B. ein Stadtkurs oder die GroßglocknerHochalpenstraße) natürlich verschiedenste Strecken und damit Testläufe abfahren, was allerdings nachvollziehbar aufwendig und nur beschränkt möglich ist. Grundsätzlich sind aber beide Möglichkeiten nicht ideal.

Die gegenständliche Erfindung hat sich daher die Aufgabe gestellt, ein Testverfahren und eine Testumgebung anzugeben, die die Vorteile der beiden oben genannten Möglichkeiten zum Testen eines Fahrzeugs oder Komponenten davon vereint und die damit verbundenen Nachteile zumindest minimiert.

Diese Aufgabe wird erfindungsgemäß dadurch gelöst, in dem die Prüfsteuereinheit eine Anzahl von Sensoren und/oder Aktoren des realen Fahrzeugs gemäß den Vorgaben der virtuellen Welt manipuliert und gleichzeitig einen Fahrzustandsaktuator gemäß den Vorgaben der virtuellen Welt ansteuert und der Fahrzustandsaktuator durch Einbringen von zusätzlichen Kräften oder Momenten in das reale Fahrzeug den in der virtuellen Welt momentanen Fahrzeugzustand und die momentane Fahrzeugumgebung erzeugt, sodass das reale Fahrzeug auf der realen Teststrecke den Fahrzeugzustand und die Fahrzeugumgebung aus der virtuellen Welt erfährt.

Durch die Merkmale der Erfindung wird praktisch ein Prüfling-in-the-Loop Prüfstand erzeugt, bei dem ein reales Fahrzeug auf einer realen Strecke bewegt wird, aber dabei eine virtuelle Welt erfährt, in der sowohl der Fahrzustand als auch die Fahrumgebung nahezu beliebig vorgegeben werden können. Durch die Verwendung eines Fahrzustandsaktuators und durch Manipulation der Sensoren und/oder Aktoren des Fahrzeugs erlebt das Fahrzeug damit die virtuelle Welt, obwohl es real auf einer realen Strecke unterwegs ist. Damit wird ein Testlauf von der realen Strecke entkoppelt und gleichzeitig aber die Interaktion zwischen Fahrzeug und realer Strecke aufrecht erhalten.

Weitere vorteilhafte Ausgestaltungen der Erfindung ergeben sich aus den Unteransprüchen und der nachfolgenden Beschreibung der Erfindung.

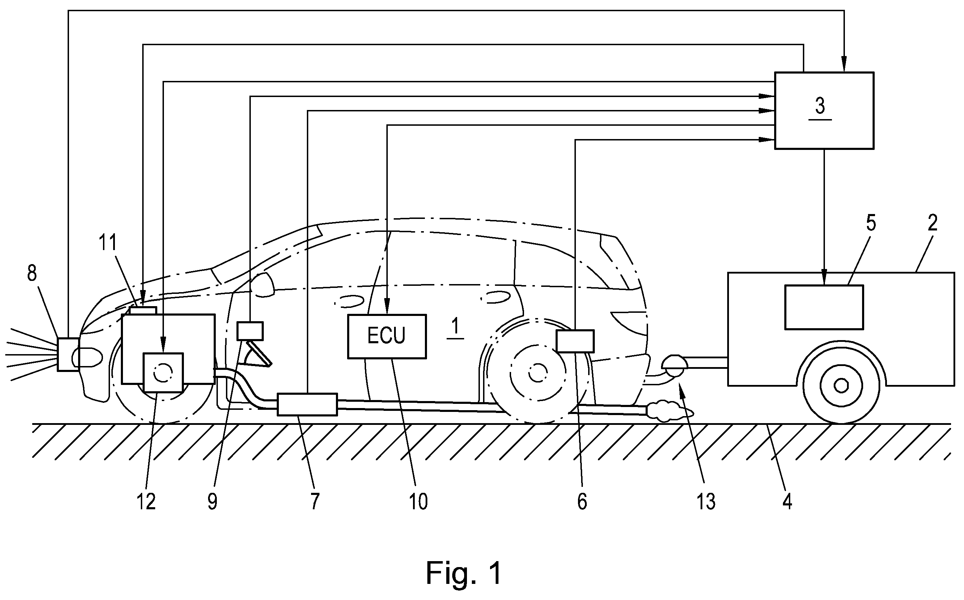

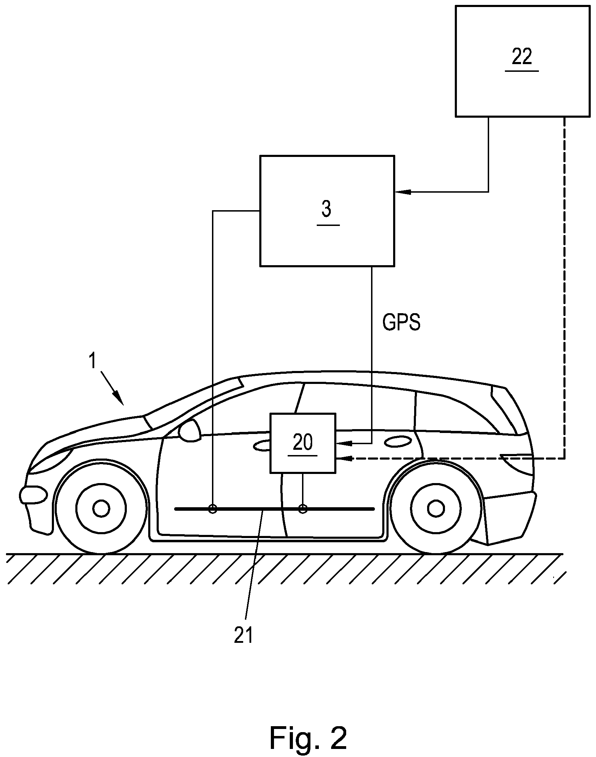

Die gegenständliche Erfindung wird nachfolgend unter Bezugnahme auf die Figuren 1 und 2, die schematische und nicht einschränkend vorteilhafte Ausgestaltungen der Erfindung zeigen, näher erläutert. Dabei zeigt
Fig.1 eine schematische Darstellung eines Fahrzeugs auf einer Teststrecke und
Fig.2 die Einbindung digitaler Karten in das erfindungsgemäße Verfahren.

Fig. 1 zeigt ein Fahrzeug 1 auf einer Teststrecke 4. Am Fahrzeug 1 ist als Fahrzustandsaktuator 2 ein Sekundärfahrzeug, hier ein Anhänger, angekoppelt. Die Ankoppelung des Fahrzustandsaktuators 2 am Fahrzeug 1 kann z.B. mit herkömmlichen Kugelkopf-Anhängerkupplungen, wie bei PKW üblich, oder aber auch mit Bolzen-Anhängerkupplungen mit Kupplungsmaul, Kupplungsöse und Bolzen oder Sattelkupplung und Königszapfen, wie bei LKW üblich, erfolgen. Es kann aber auch eine starre Ankopplung vorgesehen sein. Ebenso denkbar sind Ankopplungen mit einer geeigneten Kinematik, wie z.B. mittels eines an sich bekannten Gelenkvierecks. Die konkrete Art der Ankopplung ist aber nicht erfindungswesentlich.

Der Fahrzustandsaktuator 2 weist eine hier nicht dargestellte eigenständige Antriebs- und Belastungsmaschine auf, mit dem der Fahrzustandsaktuator 2, auch radindividuell, gebremst oder angetrieben werden kann. Es ist dabei unerheblich, welcher Art die Antriebs- und Belastungsmaschine ist, z.B. ein Verbrennungsmotor, eine elektrische Maschine, wie z.B. eine elektrische Synchronmaschine, etc., denn es kommt nur darauf an, dass der Fahrzustandsaktuator 2 eine Kraft in Längsrichtung und/oder Querrichtung des Fahrzeugs 1, also eine Beschleunigungs- oder Bremskraft, erzeugen kann. Dabei ist es auch unerheblich, ob der Fahrzustandsaktuator 2 eine Achse, eine Zwillingsachse oder zwei oder mehr Achsen hat. Ebenso ist es denkbar, dass nur eine Achse oder mehrere Achsen des Fahrzustandsaktuators 2 oder jedes Rad des Fahrzustandsaktuators einzeln angetrieben sind. Am Fahrzustandsaktuator 2 können natürlich auch noch weitere Einheiten zur Energieversorgung des Antriebs, z.B. eine Batterie oder eine Brennstoffzelle, und/oder Einheiten 5 zum Ansteuern der Antriebs- und Belastungsmaschine, z.B. geeignete Steuer- und Leistungselektronik, vorgesehen sein. Es ist aber natürlich auch denkbar, dass am Fahrzustandsaktuator 2 als Antriebs- und Belastungsmaschine zum Bremsen und Antreiben unterschiedliche Einrichtungen vorhanden sind, z.B. ein Elektromotor zum Antreiben und eine Wirbelstrombremse zum Bremsen. Der Fahrzustandsaktuator 2 könnte aber auch vor dem Fahrzeug 1 angekoppelt sein und würde dann wie eine Zugmaschine wirken.

Vorteilhaft kann am Fahrzustandsaktuator 2 an jeder Seite jeweils zumindest ein Rad mit eigenständiger Antriebs- und Belastungsmaschine, z.B. in Form von Radnabenmotoren, vorgesehen sein. Damit können mit einem solchen radindividuellen Antrieb neben Längskräften (durch Bremsen, Schieben (bzw. Ziehen)) auch Querkräfte oder Momente um die Hochachse (Giermomente), z.B. zur Durchführunge eines an sich bekannten Torque Vectorings, in das Fahrzeug 1 eingeprägt werden. Damit erhält man einen weiteren Freiheitsgrad für die durchzuführenden Tests und es lassen sich z.B. nun auch Fahrzustände mit Querkräften bzw. mit Giermomenten simulieren, um z.B. die verschiedensten Fahrstabilitätssysteme (wie z.B. ABS, ESP, etc.) zu testen. Aber es können damit auch ganz bestimmte Fahrzustände, wie z.B. das Hochfahren des Fahrzeugs am Bordstein beim Einparken (z.B. um automatische Einparkhilfen zu testen), simuliert werden.

Um das Testen des Fahrzeugs 1 von der realen Teststrecke unabhängiger zu machen ist nun eine Prüfsteuereinheit 3 vorgesehen. Diese kann am Fahrzustandsaktuator 2 oder auch am Fahrzeug 1 angeordnet sein. In der Prüfsteuereinheit 3 wird eine virtuelle Welt erzeugt und/oder eine vorab erzeugte virtuelle Welt abgespielt. Diese virtuelle Welt enthält den gewünschten Fahrzeugzustand, also z.B. Geschwindigkeit, Beschleunigung, Drehmoment, Gang, Medienzustand (ÖI, Wasser, Kraftstoff, etc.), etc., und auch die Fahrzeugumgebung, also z.B. Topologie der Strecke, Streckengeometrie, Wetterverhältnisse, Fahrbahnzustand, Verkehrssituation, etc. Im Fahrzustand steckt somit auch der durchzuführende Prüflauf, um das Fahrzeug 1 oder eine bestimmte Fahrzeugkomponente zu testen. Die virtuelle Welt definiert somit, wie sich das Fahrzeug 1 durch eine bestimmte Strecke bewegen soll.

In Realität wird das Fahrzeug 1 jedoch entlang einer realen Teststrecke 4 bewegt, z.B. von einem Testfahrer oder einem Fahrroboter, womit der reale Fahrzeugzustand und die reale Fahrzeugumgebung festgelegt sind. Die Realität weicht daher, in der Regel erheblich, von der gewünschten virtuellen Welt ab. Um das Fahrzeug 1 glauben zu lassen, dass es sich in der virtuellen Welt bewegt und somit eine definierte Strecke unter definierten Rahmenbedingungen abfährt, werden die Messwerte realer Sensoren, wie z.B. von Raddrehzahlsensoren 6, Längs- und Querbeschleunigungssensor, Lenkwinkelsensor, Sensoren des Abgassystems, wie z.B. ein λ-Sensor 7, Fahrumgebungssensoren 8 zur Umfelderkennung (wie z.B. Radar, Lidar, Ultraschall), Pedalstellung 9, etc. erfasst und der Prüfsteuereinheit 3 zugeführt. Die Sensormesswerte werden dort gemäß der virtuellen Welt manipuliert, d.h. so verändert, wie die Messwerte sein müssten, wenn sich das Fahrzeug 1 im Fahrzeugzustand und in der Fahrzeugumgebung der virtuellen Welt befände. Diese manipulierten Messwerte werden dann den Einheiten zu Verfügung gestellt, die die Messwerte verarbeiten, wie z.B. eine Motorsteuereinheit 10 (ECU), oder eine Getriebesteuereinheit, ein Fahrzeugstabilitätssystem wie z.B. ABS, ESP, eine Einspritzanlage 11, etc. Ebenso können von der Prüfsteuereinheit 3 auch Aktoren gemäß den Vorgaben der virtuellen Welt angesteuert werden, wie z.B. eine Bremsanlage 12, eine Einspritzanlage 11, ein Getriebe, etc. Dazu können direkte Verkabelungen zwischen Sensoren und den Messwertempfängern unterbrochen, oder anderweitig überbrückt werden, und die Sensoren mit der Prüfsteuereinheit 3 verbunden werden. Im Falle eines Fahrzeugbusses, wie in modernen Fahrzeugen üblich, könnte die Prüfsteuereinheit 3 auch einen Fahrzeugbus, oder einen Teil davon, simulieren.

Weiters wird von der Prüfsteuereinheit 3 auch der Fahrzustandsaktuator 2 angesteuert, um dem Fahrzeug 1 die virtuelle Welt nicht nur vorzutäuschen, sondern auch einzuprägen. Der Fahrzustandsaktuator 2 erzeugt Kräfte (Längs- und/oder Querkräfte) und/oder Momente, die über die Ankopplung 13 in das Fahrzeug 1 eingebracht werden. Das Fahrzeug 1 "erlebt" somit auch die virtuelle Welt. Z.B. kann so Gegenwind, eine Tal- oder Bergfahrt, eine Kurvenfahrt, ein bestimmter Lastzustand, ein bestimmter Straßenverkehr (wie z.B. stop-and-go) simuliert werden, obwohl das Fahrzeug 1 in echt z.B. auf einer ebenen geraden Teststrecke 4 oder einem Rundkurs fährt.

Diese Simulation der virtuellen Welt kann dabei so weit gehen, dass dem Fahrer die virtuelle Welt über einem Bildschirm auch vorgespielt werden kann, der Fahrer die virtuelle Welt somit auch sehen kann.

Damit lassen sich die unterschiedlichsten Situationen simulieren - beispielhaft: Für Emissionstests werden Fahrzeuge mit einer Fülle von Messtechnik ausgestattet. Das Gewicht der Messtechnik verfälscht aber natürlich die Kraftstoffverbrauchs- und Emissionswerte. Es könnte nun z.B. vorgesehen sein, das Gewicht der Messtechnik durch den Fahrzustandsaktuator weg zu simulieren, um genauere Verbrauchs- und Emissionsmesswerte zu erhalten. Gewisse Fahrsituationen, wie z.B. Kolonnenverkehr oder stop-and-go Verkehr, Stadtverkehr, etc., sind kaum nachzustellen. Mit dem erfindungsgemäßen Verfahren können aber solche Fahrsituationen hergestellt und getestet werden.

Die Fahrzeugumgebung kann auch aus verfügbarem digitalem Kartenmaterial gewonnen werden. Solche digitale Karten, eventuell mit diversen Zusatzinformationen, wie Verkehrszeichen, Topologie, Geometrie, etc., können kommerziell erworben werden, können aber auch aus online Quellen, wie z.B. Google Earth, bezogen werden. Aus diesem digitalen Kartenmaterial kann dann die Fahrzeugumgebung einer bestimmten Strecke extrahiert werden.

Dabei ist es auch möglich, einem im Fahrzeug verbauten Navigationssystem virtuelle GPS-Daten vorzugeben, z.B. durch Emulation von sechzehn Satellitenpositionen rund um das Fahrzeug durch geeignete Sendeeinrichtungen. Dem Fahrzeug 1 kann somit auch ein beliebiger virtueller Ort vorgespielt werden. Z.B. ist es erfindungsgemäß möglich auf einer beliebigen Teststrecke einen beliebigen Stadtkurs mit Verkehr zu simulieren.

Heutige Fahrzeuge haben vermehrt auch Systeme, die es ermöglichen, die vorausliegende Wegstrecke zu analysieren, z.B. in Form einer digitalen Kartenvorschau, die ebenfalls auf digitalem Kartenmaterial (als Abbild der Realität) basieren kann. In dieser digitalen Kartenvorschau können Informationen zu der vorausliegenden Wegstrecke, wie Verkehrszeichen, Baustellen, Kreuzungen, etc., als auch topographische und geometrische Informationen der Strecke, wie z.B. Kurven, Steigungen, Gefälle, etc., enthalten sein. Durch diese digitale Kartenvorschau können Systeme des Fahrzeugs 1, wie z.B. das Motorsteuergerät (ECU), die Getriebesteuerung (TCU) oder auch Fahrerassistenzsysteme, wie z.B. Adaptive Cruise Control (ACC), Abstandsregelsysteme, Bremsassistenten, Spurassistenten, etc., ihre jeweiligen Funktionen vorausschauend optimieren. Ein Steuergerät, z.B. ein Navigationssystem, kann die Fahrzeugposition bestimmen, z.B. mit Hilfe von GPS, und kann die digitale Kartenvorschau erstellen und anderen Einheiten zur Verfügung stellen. Dazu können die Kartendaten, z.B. über den Fahrzeugbus, in einem standardisierten Datenprotokoll, wie z.B. ADASIS, zu Verfügung gestellt werden.

Auch solche digitale Kartenvorschauen können in das erfindungsgemäße Verfahren eingebunden werden, wie in Fig. 2 schematisch dargestellt. Dazu erstellt die Prüfsteuereinheit 3 aus dem digitalen Kartenmaterial 22 die Fahrzeugumgebung für die gewünschte Teststrecke mit den gewünschten Zusatzinformationen. Alternativ kann die Fahrzeugumgebung der Prüfsteuereinheit 3 zur Verfügung gestellt werden. Die Prüfsteuereinheit 3 versorgt nun während des Prüflaufs ein Steuergerät 20 des Fahrzeugs 1, z.B. ein Navigationssystem, eine Getriebesteuereinheit, eine Motorsteuereinheit, etc., mit den GPS-Daten der Strecke. Alternativ könnten die GPS-Daten auch emuliert werden, wie oben beschrieben. Damit wird dem Fahrzeug 1 vorgespielt, sich tatsächlich entlang der gewünschten Strecke zu bewegen, womit auch die Funktionen der digitalen Kartenvorschau funktionieren bzw. getestet werden können. Die digitale Kartenvorschau kann über den Fahrzeugbus 21 auch anderen Einheiten des Fahrzeugs 1, wie z.B. ECU, TCU, ACC, etc., zur Verfügung gestellt werden. Dazu sollte das digitale Kartenmaterial, das dem Fahrzeug 1 zur Verfügung steht, mit dem digitalen Kartenmaterial 22, aus dem die Fahrzeugumgebung gewonnen wurde, übereinstimmen, um Abweichungen im Testlauf zu vermeiden, wie in Fig. 2 durch die strichlierte Linie angedeutet.

## Patentansprüche

1. Verfahren zum Testen eines Fahrzeugs oder einer Komponente eines Fahrzeugs, wobei das reale Fahrzeug auf einer realen Teststrecke (4) fährt und eine Prüfsteuereinheit (3) eine virtuelle Welt erzeugt oder abspielt, die sowohl einen virtuellen Fahrzeugzustand, als auch eine virtuelle Fahrzeugumgebung enthält **dadurch gekennzeichnet, dass** die Prüfsteuereinheit (3) eine Anzahl von Sensoren und/oder Aktoren des realen Fahrzeugs (1) gemäß den Vorgaben der virtuellen Welt manipuliert und gleichzeitig einen Fahrzustandsaktuator (2) gemäß den Vorgaben der virtuellen Welt ansteuert **und dass** der Fahrzustandsaktuator (2) durch Einbringen von zusätzlichen Kräften oder Momenten in das reale Fahrzeug (1) den in der virtuellen Welt momentanen Fahrzeugzustand und die momentane Fahrzeugumgebung erzeugt, sodass das reale Fahrzeug (1) auf der realen Teststrecke (4) den Fahrzeugzustand und die Fahrzeugumgebung aus der virtuellen Welt erfährt.

2. Verfahren nach Anspruch 1, **dadurch gekennzeichnet, dass** der von der Prüfsteuereinheit (3) erzeugte Fahrzeugzustand auch einen Medienzustand des Fahrzeugs (1) umfasst.

3. Verfahren nach Anspruch 1 oder 2, **dadurch gekennzeichnet, dass** die Prüfsteuereinheit (3) einem Steuergerät (20) des Fahrzeugs (1) Daten sendet, die dem Steuergerät (20) die Positionsbestimmung des Fahrzeugs (1) ermöglicht.

4. Verfahren nach Anspruch 1 oder 2, **dadurch gekennzeichnet, dass** GPS-Daten emuliert werden, die einem Steuergerät (20) des Fahrzeugs (1) die Positionsbestimmung des Fahrzeugs (1) ermöglicht

5. Verfahren nach Anspruch 3 oder **4, dadurch gekennzeichnet, dass** das Steuergerät (20) anhand der ermittelten Position und anhand von digitalem Kartenmaterial eine digitale Kartenvorschau erstellt und anderen Einheiten des Fahrzeugs (1) zur Verfügung stellt.

6. Verfahren nach einem der Ansprüche 1 bis 5, **dadurch gekennzeichnet, dass** durch den Fahrzustandsaktuator (2) Längs- und/oder Querkräfte und/oder Momente in das Fahrzeug (1) eingebracht werden.

## Claims

1. A method for testing a vehicle or a component of a vehicle, wherein the real vehicle drives on a real test track (4), and a test control unit (3) generates or plays back a virtual world which contains both a virtual vehicle state and a virtual vehicle environment, **characterized in that** the test control unit (3) manipulates a number of sensors and/or actuators of the real vehicle (1) according to the requirements of the virtual world and, at the same time, actuates a driving state actuator (2) according to the requirements of the virtual world, **and that** the driving state actuator (2) generates the instantaneous vehicle state and the instantaneous vehicle environment of the virtual world by introducing additional forces or moments into the real vehicle (1) so that the real vehicle (1) experiences the vehicle state and the vehicle environment from the virtual world on the real test track (4).

2. The method as claimed in claim 1, **characterized in that** the vehicle state generated by the test control unit (3) also includes a media state of the vehicle (1).

3. The method as claimed in claim 1 or 2, **characterized in that** the test control unit (3) sends data to a control device (20) of the vehicle (1) which enables the control device (20) to determine the position of the vehicle (1).

4. The method as claimed in claim 1 or 2, **characterized in that** GPS data are emulated, which enables a control device (20) of the vehicle (1) to determine the position of the vehicle (1).

5. The method as claimed in claim 3 or 4, **characterized in that** the control device (20) creates a digital map preview based on the determined position and based on digital map material and makes it available to other units of the vehicle (1).

6. The method as claimed in one of claims 1 to 5, **characterized in that** longitudinal and/or transverse forces and/or moments are introduced into the vehicle (1) by means of the driving state actuator (2).

## Revendications

1. Procédé pour tester une véhicule ou un composant d'un véhicule, dans lequel le véhicule réel circule sur un trajet d'essai réel (4) et une unité de commande d'essai (3) génère ou affiche un monde virtuel, contenant aussi bien un état virtuel du véhicule qu'un environnement virtuel du véhicule, **caractérisé en ce que** l'unité de commande d'essai (3) manipule un nombre de capteurs et/ou d'acteurs du véhicule réel (1) selon les spécifications du monde virtuel, et actionne simultanément un actionneur d'état de conduite (2) selon les spécifications du monde virtuel, et **en ce que** l'actionneur d'état de conduite (2) génère l'état du véhicule momentané dans le monde virtuel et l'environnement momentané du véhicule en appliquant des forces ou des couples supplémentaires au véhicule réel (1), de manière à ce que le véhicule réel (1) connaisse l'état du véhicule et l'environnement du véhicule du monde virtuel sur le trajet d'essai réel (4).

2. Procédé selon la revendication 1, **caractérisé en ce que** l'état du véhicule généré par l'unité de commande d'essai (3) comprend également un état des fluides du véhicule (1).

3. Procédé selon la revendication 1 ou 2, **caractérisé en ce que** l'unité de commande d'essai (3) envoie des données à un dispositif de commande (20) du véhicule (1), lesquelles permettent au dispositif de commande (20) de déterminer la position du véhicule (1).

4. Procédé selon la revendication 1 ou 2, **caractérisé en ce que** des données GPS sont émulées, lesquelles permettent à un dispositif de commande (20) du véhicule (1) de déterminer la position du véhicule (1).

5. Procédé selon la revendication 3 ou 4, **caractérisé en ce que** le dispositif de commande (20) génère un aperçu de carte numérique à l'aide de la position déterminée et à l'aide de références cartographiques numériques, et met celui-ci à la disposition d'autres unités du véhicule (1).

6. Procédé selon l'une des revendications 1 à 5, **caractérisé en ce que** l'actionneur d'état de conduite (2) applique des forces longitudinales et/ou transversales et/ou des couples au véhicule (1).
